# EUROPEAN PATENT APPLICATION

(11) **EP 3 489 138 A1**
(43) Date of publication of application: **29.05.2019**
(21) Application number: 17382792.4
(22) Date of filing: 24.11.2017
(51) Int. Cl.: B64C 39/02, E21B 43/117, F42B 12/10

(54) **UNMANNED AERIAL VEHICLE**

(71) Applicant: Expace on Board Systems, S.L., 28919 Leganés, Madrid (ES)
(72) Inventor: GARCÍA GARCÍA, Rubén, E-28919 Leganés, Madrid (ES); ESTEBAN LÓPEZ, Antonio, E-28046 Madrid (ES)
(74) Representative: ABG Intellectual Property, S.L.

(57) **Abstract**

The present invention relates to unmanned aerial vehicles for use in mining and civil engineering, and, more particularly, to unmanned aerial vehicles capable of carrying an explosive charge and the corresponding system for controlling the vehicle and initiating the explosive charge. A method of operation is also described.

## Description

### TECHNICAL FIELD OF THE INVENTION

The present invention relates to unmanned aerial vehicles for use in mining and civil engineering, and, more particularly, to unmanned aerial vehicles capable of carrying an explosive charge and the corresponding system for controlling the vehicle and initiating the explosive charge. A method of operation is also described.

### BACKGROUND OF THE INVENTION

The recent technical improvements and diffusion of the unmanned aerial vehicles (often called *drones*) of all sizes and configurations have led to a dramatic increase in the applications for these devices. Their cost efficiency, availability and versatility, enable a wide range of uses in several technological fields. Their ability to lift relatively small weights enables them to carry useful devices such as cameras, radiofrequency emitters-receivers and so on. It is also possible to carry and drop small packages, which is useful in logistics.

Civil engineering, industrial mining and demolition have also been favored by this technology and places previously unreachable by technicians now fall within the range of these unmanned aerial vehicles. However, in the aforementioned fields, the accurate placement of an explosive charge of certain power is key to attain the desired effect.

Commercially available hovering type drones, such as the so called *multicopters,* are useful in cases where an item has to be delivered with significant accuracy. In that sense, a *multicopter* would be capable of delivering the load with enough accuracy for demolition or mining purposes, but their load capability would be well under the weight of the required explosive charge. Fixed-wings type drones can carry and drop loads of some weight, but they are unable to place an explosive charge in the desired place with the required accuracy.

### SUMMARY OF THE INVENTION

The present invention provides an alternative solution for the aforementioned problems, by an unmanned aerial vehicle according to claim 1, a charge detonation system according to claim 10 and a method for detonating a charge using an unmanned aerial vehicle according to claim 12. In dependent claims, preferred embodiments of the invention are defined.

In a first inventive aspect, the invention provides *an unmanned aerial vehicle, comprising at least one explosive charge, at least one explosive charge initiator, and propulsion means, the unmanned aerial vehicle being configured to position and initiate the at least one explosive charge, characterized in that the at least one explosive charge initiator is configured to initiate the at least one explosive charge at a specific standoff distance to a target, the at least one explosive charge is a shaped or directional charge and configured to be preferably positionable substantially perpendicularly oriented to a surface of the target.*

Throughout this entire document, *initiator* will be understood as the device which causes the initiation or detonation of the at least one explosive charge, for example a detonator or a fuse. *Explosive charge* will be understood as an explosive material or device, pyrotechnic material or device, or a similar reactive element, capable of releasing a large amount of energy within a very short lapse of time; this explosive charge will be said to be *shaped or directional* if it has a preferred direction other than spherical for delivering the energy which enhances the effect of the of explosive charge. *Standoff distance* will be understood as the distance between the explosive charge and the target, according to a preferred direction of the shaped or directional explosive charge.

Advantageously, the unmanned aerial vehicle is capable of performing stationary flight (or *hovering*) and sustaining a particular attitude, allowing a precise positioning of an explosive charge in terms of orientation and distance to a target.

As a further advantage, the explosive charge projects the detonation energy, usually in the form of a shock wave, in a preferred direction onto a particular area; depending on the type of explosive charge this area can be a single point, a line or a surface. The effect of the shaped or directional explosive charge is greatly enhanced in this area, typically producing a penetrating or piercing effect. Thus, a shaped or directional explosive charge compensates a lower power and weight with the penetrating capability for attaining the same effect.

In a particular embodiment, the unmanned aerial vehicle *comprises a standoff distance sensing means, configured to determine a standoff distance of the at least one explosive charge to a surface of the target, preferably the optimal standoff distance.*

Throughout this entire document, *specific standoff distance* or *optimal standoff distance* will be understood as the distance, particular to each type of shaped or directional explosive charge, which allows the highest efficiency of the shaped or directional explosive charge. Although this distance is termed *optimal,* it should be understood as a reference, and not as an exact distance.

Advantageously, the distance sensing means allow an accurate determination of the standoff distance, in order to match the actual standoff distance with the optimal standoff distance.

In a particular embodiment, the unmanned aerial vehicle *comprises a vehicle attitude sensing means, configured to detect a specific attitude of the at least one explosive charge relative to a surface of the target, preferably perpendicularly oriented to a surface of the target.*

Advantageously, the highest efficiency is attained when the shaped or directional explosive charge is placed at a specific distance to a surface of the target and its preferred direction is oriented substantially perpendicular to a surface of the target.

Advantageously, the attitude sensing means allow an accurate determination of the orientation of the explosive charge relative to a reference direction or a designated target, in order to match the orientation of the explosive charge with the preferred direction of the shaped or directional explosive charge.

In a particular embodiment, the unmanned aerial vehicle *comprises imagery detection means, preferably a camera or a night vision camera.*

Advantageously, the imagery detection means enable an operator to obtain visual information of the activity of the unmanned aerial vehicle. In a further advantage, the imagery detection means enable an operator to detect a target.

In a particular embodiment, the unmanned aerial vehicle *comprises positioning means, preferably a GPS system receiver device.*

Advantageously, the positioning means enable an accurate navigation of the unmanned aerial vehicle.

In a particular embodiment, the unmanned aerial vehicle *comprises orienting means configured to orient the at least one explosive charge in a specific direction, preferably perpendicularly oriented to a surface of the target.*

Advantageously, the orienting means enable a practical attitude control of the unmanned aerial vehicle, which provides an accurate orientation of the explosive charge relative to the designated target. As a further advantage, a substantially perpendicular orientation of the preferred direction of the shaped or directional explosive charge relative to a surface of the target enables an enhanced penetrating power of the blast.

In a particular embodiment, *the propulsion means comprise one or more rotor blades.*

Advantageously, the rotor blades, as mounted on a *multicopter* type unmanned aerial vehicle, provide multiaxial movement for a vehicle, as well as hovering capabilities and a high level of maneuverability.

In a particular embodiment, *the propulsion means comprise one or more thrust vectoring means.*

Advantageously, the thrust vectoring means provide an alternative to the rotor blades, with a higher degree of maneuverability.

In a second inventive aspect, the invention provides a *charge detonation system comprising an unmanned aerial vehicle according to the previous inventive aspect and a control station, wherein the control station comprises communication means, configured to provide bi-directional communication with the unmanned aerial vehicle, data displaying means, preferably a screen display, at least one set of steering means, configured to provide attitude and position control of the unmanned aerial vehicle, preferably a joystick or a control pad, and an explosive charge initiating control.*

Advantageously, the control station provides a convenient operation and control interface.

In a particular embodiment, the charge detonation system comprises *at least a second unmanned aerial vehicle, comprising imagery detection means and communication means, wherein the imagery detection means are configured to locate a target and monitor the first unmanned aerial vehicle, and wherein the communication means are configured to provide bi-directional communication between the first unmanned aerial vehicle and the control station.*

Advantageously, the second unmanned aerial vehicle allows improved communication and control capabilities to the system, particularly in terms of accurately positioning the first unmanned aerial vehicle relative to a target.

In a third inventive aspect, the invention provides a *method for detonating a charge using an unmanned aerial vehicle, the method comprising the steps of:*
*a. providing a charge detonation system according to the previous inventive aspect,*
*b. positioning the unmanned aerial vehicle near the target with the help of the steering means,*
*c. precise positioning the unmanned aerial vehicle relative to a surface of the target with the help of the standoff distance sensing means and the attitude sensing means, preferably substantially perpendicularly oriented to a surface of the target, and*
*d. initiating the explosive charge with the explosive charge initiating control.*

In a particular embodiment, *the step of positioning the unmanned aerial vehicle near the target and*/*or the step of precise positioning the unmanned aerial vehicle relative to a surface of the target is performed manually.*

Advantageously, the manual control of the positioning enables a conventional operation of the system, with improved safety due to the active monitoring of the operator.

In a particular embodiment, *the step of positioning the unmanned aerial vehicle near the target and*/*or the step of precise positioning the unmanned aerial vehicle relative to a surface of the target is performed automatically with a computer program.*

Advantageously, the automatic control of the positioning enables a simplified programmed operation of the system, with improved safety due to the active monitoring of the operator.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a general view of the unmanned aerial vehicle of the invention.
- Figure 2: This figure shows the charge detonation system with a first vehicle, a second vehicle, and a target.
- Figure 3: This figure shows the control station.
- Figure 4: Shows a detail of the unmanned aerial vehicle

### DETAILED DESCRIPTION OF THE INVENTION

In a preferred embodiment, the unmanned aerial vehicle (1) of this invention comprises an explosive shaped charge and the corresponding system for controlling the vehicle and detonating the explosive charge (2). A method of operation is also described in this section.

### Unmanned aerial vehicle

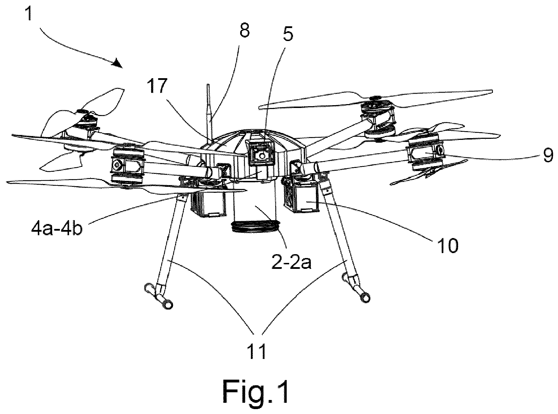

Figure 1 shows the unmanned aerial vehicle (1), which in the depicted embodiment is an unmanned aerial vehicle of the *quadcopter* type, capable of hovering, and equipped with an explosive charge (2) devised to be initiated at a specific standoff distance (16) of a given target (7) surface.

In this embodiment, the propulsion means (9) are four vertically oriented propellers fed by a power source (10), a bank of Li-ion or lithium polymer batteries. The propulsion means (9) are arranged symmetrically, at the ends of four booms; in order to produce a course or attitude change of the vehicle (1), the speeds of each of the propulsion means (9) can be controlled independently. The support structure (11) for the vehicle comprises a pair of legs in this embodiment.

The unmanned aerial vehicle (1) of this embodiment comprises a number of conventional sensors and controls, particularly one or more processing units, positioning means (17) like an inertial navigation system or a GPS positioning system, stabilization controls, comprising gyroscopes or accelerometers, communication means (8), typically radio frequency or infrared emitters and receivers, or a combination of them.

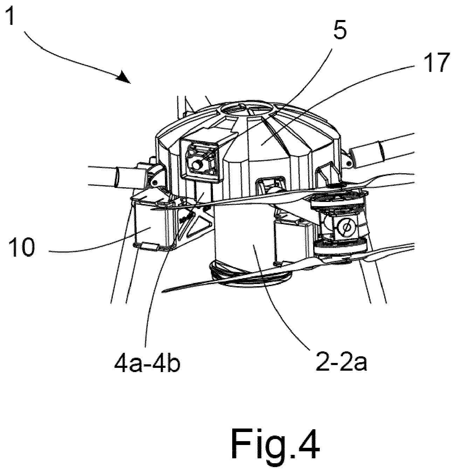

Additionally, several elements with specific purpose for the invention can be seen on the embodiments shown in Figs. 1 and 4, such as standoff distance sensing means (4a), vehicle attitude sensing means (4b), and imagery detection means (5), like a camera or an infrared camera. The standoff distance sensing means (4a) and vehicle attitude sensing means (4b) enable the vehicle an accurate control of the standoff distance and orientation relative to a surface of the target (7). This is accomplished by means of distance transducers, LIDAR, or similar rangefinder technology for the standoff distance sensing means (4a), and by means of gyroscopes or accelerometers for the attitude sensing means (4b). The imagery detection means (5) enable the identification and location of the target (7), either by sending imagery signals to a human operator through a control station (3), or processing the imagery with image recognition means and sending the identification signal to the main controller.

### Explosive charge

The explosive charge (2) is of the shaped or directional type, that means, an explosive charge with a preferred direction in which the blast is enhanced, thus producing a stronger effect with substantially less amount of explosive material, and consequently a lower weight.

In a preferred embodiment the explosive charge (2) is arranged in the open lower part of the unmanned aerial vehicle (1), in order to enable the shock wave to travel towards a surface of the target (7) without hindrance as the vehicle (1) hovers over the target (7). In the embodiments shown in Figs. 1 and 4, the explosive charge (2) is a conical hollow charge arranged on the lower side of the unmanned aerial vehicle (1) perpendicularly to the horizontal flying plane. Besides of the explosive charge (2), its corresponding explosive charge initiator (2a) can be seen on Figs. 1 and 4. The conical hollow charge enables to form a concentrated shock wave according to the Munroe effect. For this reason it is very important to position the explosive charge (2) at a precise standoff distance and pointing perpendicularly to a surface of the target (7).

Other types of charges can be used in essentially the same way, such as tandem charges, explosively formed penetrators, linear shaped charges, etc.

In an alternative embodiment, not depicted in the figures, the explosive charge (2) is mounted on a tilting case, in such a way that the charge can be oriented towards the target (7); advantageously, the tilting case can be actuated during operation, and operatively connected to the vehicle controls.

### Charge detonation system

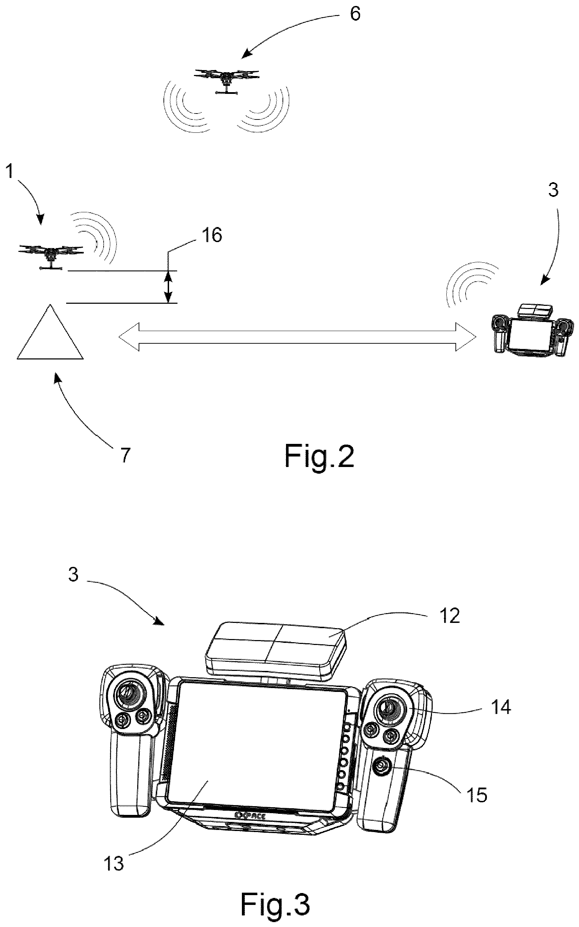

Fig. 2 shows an embodiment of the charge detonation system. It comprises a first unmanned aerial vehicle (1), a control station (3) and a second unmanned aerial vehicle (6). This second unmanned aerial vehicle (6) is optional and could be used as a communication's relay between the first unmanned aerial vehicle (1) and the control station (3), as a target (7) location or positioning assistance for the first unmanned aerial vehicle (1) or both; for these uses the first and second unmanned aerial vehicles (1,6) must be communicated between each other and with the control station (3). Communication means (8) are provided for that purpose.

The control station (3), depicted in Fig. 3, is devised to provide manual control for the first and second unmanned aerial vehicles (1,6), by positioning the first unmanned aerial vehicle (1) in the surroundings of the target (7), and then approach the target (7) to an optimal standoff distance (16) and transmitting an initiation signal to the explosive charge initiator (2a) while receiving image or positioning signals from the communication means (8) and imagery detection means (5).

In an embodiment the control station (3) comprises communication means (12), a screen display (13), such as a LCD screen, plasma display or similar, for displaying the imagery and other relevant data, steering means (14) for the vehicle control and an explosive charge initiation control (15), for emitting an initiation signal to the explosive charge initiator (2a).

### Method of operation

The charge detonation system can be operated either manually by an operator with the control station (3) or automatically, with a computer program, which performs essentially the same function. Partial operation modes are possible as well, for instance, with automatic location of the target (7) and positioning, and with manual command of the charge initiation control (15).

In a preferred operation procedure, the first unmanned aerial vehicle (1) is first positioned substantially near the target (7), using either a manual control or automatic means, with the help of positioning means (17), and imagery detection means (5). Then, the standoff distance sensing means (4a) and vehicle attitude sensing means (4b) help either the operator or the program to position the explosive charge (2) at an optimal standoff distance (16) and with a particular orientation according to a preferred direction. Then, the explosive charge initiator (2a) is activated and the explosive charge (2) is detonated. The present invention does not need to release the explosive charge (2) before its detonation, which in practice makes the unmanned aerial vehicle (1) an expendable item.

In an alternative embodiment, the explosive charge (2) is activated automatically upon reaching the optimal standoff distance and attitude; in this case, the unmanned aerial vehicle (1) would work in a fully automatic way, with minimal or no assistance of the operator.

The target (7) surface does not need to be parallel to the ground; instead, the unmanned aerial vehicle (1) is capable of tilting, directing the preferred direction of the explosive charge (2) towards the target (7) surface, preferably perpendicular to this surface, in order to enhance the effect of the shock wave.

Optionally, the second unmanned aerial vehicle (6) is positioned near the target (7) as well, especially if the target (7) is far away from the control station (3), in order to work as a communication's relay between the first unmanned aerial vehicle (1) and the control station (3). The second unmanned aerial vehicle (6) can be deployed firstly to locate the target (7) with the imagery detection means (5) or other sensors, and then send the location information to the first unmanned aerial vehicle (1) with the communication means (8).

In another embodiment, the second unmanned aerial vehicle (6) also comprises an explosive charge (2) and an explosive charge initiator (2a), and is capable of conducting the same functions of the first unmanned aerial vehicle (1); thus, a higher level of effectiveness is attained either in case the first unmanned aerial vehicle (1) misses the target (7) or experiences a malfunction. In a further embodiment, the first unmanned aerial vehicle (1) and the second unmanned aerial vehicle (6) comprise explosive charges (2), and are capable of positioning and initiating the explosive charges (2) on the same or different targets (7) essentially at the same time.

In an optional embodiment, the system comprises a plurality of first unmanned aerial vehicles (1), a plurality of second unmanned aerial vehicles (6), or both, working as described on previous sections. Such a system enables the application of the present invention to large or very resistant targets (7), such as quarries or buildings made of reinforced concrete.

## Claims

1. Unmanned aerial vehicle (1), comprising
at least one explosive charge (2),
at least one explosive charge initiator (2a), and
propulsion means (9),
the unmanned aerial vehicle (1) being configured to position and initiate the at least one explosive charge (2),
**characterized in that**
the at least one explosive charge initiator (2a) is configured to initiate the at least one explosive charge (2) at a specific standoff distance (16) to a target (7),
the at least one explosive charge (2) is a shaped or directional charge and configured to be positionable substantially perpendicularly oriented to a surface of the target (7).

2. The unmanned aerial vehicle (1) according to claim 1 **characterized in that** it comprises a standoff distance sensing means (4a), configured to determine a specific standoff distance (16) of the at least one explosive charge (2) to a surface of the target (7), preferably the optimal standoff distance.

3. The unmanned aerial vehicle (1) according to any of claims 1-2, **characterized in that** it comprises a vehicle attitude sensing means (4b), configured to detect a specific attitude of the at least one explosive charge (2) relative to a surface of the target (7), preferably perpendicularly oriented to a surface of the target (7).

4. The unmanned aerial vehicle (1) according to any of the preceding claims **characterized in that** it comprises imagery detection means (5), preferably a camera or a night vision camera.

5. The unmanned aerial vehicle (1) according to any of the preceding claims **characterized in that** it comprises communication means (8), preferably a radio frequency transmitter-receiver.

6. The unmanned aerial vehicle (1) according to any of the preceding claims **characterized in that** it comprises positioning means (17), preferably a GPS system receiver device.

7. The unmanned aerial vehicle (1) according to any of the previous claims **characterized in that** it comprises orienting means configured to orient the at least one explosive charge (2) in a specific direction, preferably perpendicularly oriented to a surface of the target (7).

8. The unmanned aerial vehicle (1) according to any of the preceding claims, wherein the propulsion means (9) comprise one or more rotor blades.

9. The unmanned aerial vehicle (1) according to any of the preceding claims wherein the propulsion means (9) comprise one or more thrust vectoring means.

10. A charge detonation system comprising:
an unmanned aerial vehicle (1) according to any of claims 1-9; and
a control station (3) wherein the control station (3) comprises:
communication means (12), configured to provide bi-directional communication with the unmanned aerial vehicle (1);
data displaying means, preferably a screen display (13);
at least one set of steering means (14), configured to provide attitude and position control of the unmanned aerial vehicle (1), preferably a joystick or a control pad; and
an explosive charge initiating control (15).

11. The charge detonation system according to claim 10 **characterized in that** it comprises
at least a second unmanned aerial vehicle (6), comprising imagery detection means (5) and communication means (8), wherein the imagery detection means (5) are configured to locate a target (7) and monitor the first unmanned aerial vehicle (1), and wherein the communication means (8) are configured to provide bi-directional communication between the first unmanned aerial vehicle (1) and the control station (3).

12. A method for detonating a charge using an unmanned aerial vehicle (1), the method comprising the following steps:
a. providing a charge detonation system according to claims 10-11,
b. positioning the unmanned aerial vehicle (1) near the target (7) with the help of the steering means (14),
c. precise positioning the unmanned aerial vehicle (1) relative to a surface of the target (7) with the help of the standoff distance sensing means (4a) and the attitude sensing means (4b), preferably substantially perpendicularly oriented to a surface of the target (7), and
d. initiating the explosive charge (2) with the explosive charge initiating control (15).

13. The method of claim 12, wherein the step of positioning the unmanned aerial vehicle (1) near the target (7) and/or the step of precise positioning the unmanned aerial vehicle (1) relative to a surface of the target (7) is performed manually.

14. The method of claim 12, wherein the step of positioning the unmanned aerial vehicle (1) near the target (7) and/or the step of precise positioning the unmanned aerial vehicle (1) relative to a surface of the target (7) is performed automatically with a computer program.
